# EUROPEAN PATENT SPECIFICATION

(11) **EP 0 818 428 B1**
(45) Date of publication and mention of the grant of the patent: **19.09.2001**
(21) Application number: 97305147.7
(22) Date of filing: 11.07.1997
(51) Int. Cl.: C04B 28/26

(54) **Hard ceramic body**
Hartes keramisches Material
Matériau céramique dur

(30) Priority: 12.07.1996 JP 18315396; 04.06.1997 JP 14637697
(43) Date of publication of application: 14.01.1998
(73) Proprietor: Kurosawa Construction Co., Ltd., Chofu-shi, Tokyo 182 (JP); Reflex Co., Ltd., Shinjuku-ku, Tokyo 160 (JP)
(72) Inventor: Tanabe, Keizo, c/o Kurosawa Construction Co., Ltd., Chofu-shi, Tokyo 182 (JP); Matsuura, Katsuharu, Shinjuku-ku, Tokyo 160 (JP)
(74) Representative: Allard, Susan Joyce

(56) References cited:
- EP-A- 0 257 128
- EP-A- 0 417 583
- EP-A- 0 495 336
- DE-A- 4 104 596
- US-A- 4 642 137
- US-A- 4 780 142

## Description

The present invention relates to a hard ceramic body for use as an exterior-wall covering material for a building structure or as a heat-resistant covering material for a furnace.

Tile is one of such exterior-wall covering materials. Tiles have good resistance to heat and weather as well as excellent appearance. When a building structure is covered with exterior tiles, its fire resistance and durability will be increased with better appearance. However, commercial tiles are produced through calcination at a high temperature and their size is thus limited to substantially 30 cm square at best. This increases the cost per piece and external walls covered with tiles will be highly expensive as compared with ordinary materials.

In view of the forgoing aspects, we, the inventors, have developed a novel material which is identical to tiles in the resistance to heat and weather and good appearance but is produced without a calcinating process at a high temperature which restricts the overall size of the material. An object of the present invention is to provide a hard ceramic body which is cured at a normal temperature and has characteristics equal to those of a tile.

EP-A-0417583 relates to a process for the preparation of a hardened body. A hard ceramic body according to the present invention is obtainable by mixing and curing ingredients, said ingredients comprising:
(i) a first powder material composed of:
   (a) from 30 to 50 wt.% of an electric-furnace steelmaking slag in the form of granules of less than 120 µm in diameter, said slag including 15 wt.% or more of silicon dioxide and 25 wt.% or more of calcium oxide;
   (b) from 30 to 50 wt.% of silicon dioxide in the form of silica powders of from 0.1 µm to 1 µm in diameter; and
   (c) from 10 to 30 wt.% of either aluminium oxide or aluminium hydroxide in the form of granules of from 0.5 µm to 100 µm in diameter;
(ii) a second powder material of silica sand in the form of aggregates; and
(iii) water-glass.

The hard ceramic body of the present invention has good resistance to heat and weather, and exhibits no change in both a heat-resistance test conducted at 1050 °C for three hours and a weather-resistance test conducted for 1,000 hours with the use of a weatherometer. Its compressive strength can be as high as 1,000 to 3,000 kgf/cm² and its hardness can be 4 to 6 in Mohs scale, which characteristics can meet properties required for use as exterior-wall covering materials, to the extent that can be provided by tiles. The hard ceramic body of the present invention is also desirable for use as a heat resistant material in a furnace.

When cured at a normal temperature, the hard ceramic body of the present invention can provide so high strength characteristics as described above that its size can be easily increased to a large dimension over one meter. For example, a commonly available size such as a curtain wall panel for a building structure can be made of one or a minimum number of the hard ceramic bodies. Such an exterior-wall covering material made of one or more of the hard ceramic bodies will hence be reduced in the cost while having a quality equal to that of a conventional tile coating.

The hard ceramic body of the present invention can be cured after sprayed or painted over a base material. This technique is useful for making external sidings of a building structure and particularly desirable for providing a heat-resistant wall in a furnace.

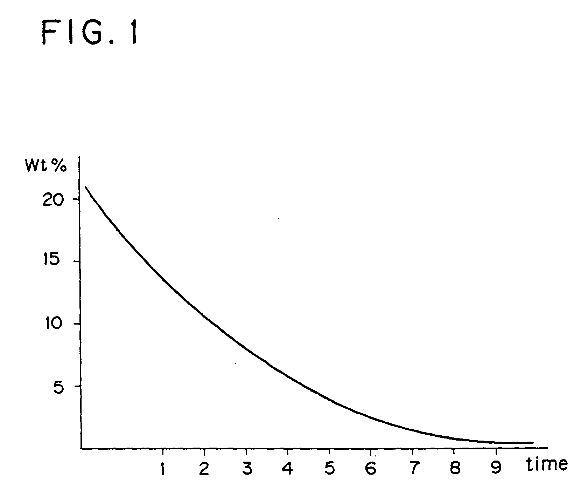

The hard ceramic body of the present invention having the above ingredients is characterized by employing water-glass for mixing, and controlling the dosage of calcium oxide to a predetermined percentage. Mixing of the powder materials as formulated above with the water-glass guarantees a quality of the ceramic body. The predetermined percentage of calcium oxide determines curing speed, thereby various curing time required for forming a desired product can be secured. The relation between the curing time and the percentage of calcium oxide is shown in Fig. 1. As apparent, the dosage of calcium oxide in the total of the powder materials is preferably 0.05 to 20 wt%.

The second powder material which serves as aggregates may preferably be silica sand of 0.1 to 2 mm in diameter. The physical characteristics of the finished hard ceramic body largely depend on the size of those powder materials and the above mentioned diameters are most desirable.

The first powder material in the hard ceramic body is composed of a mixture of 30 to 50 wt% of an electric-furnace steelmaking slag, 30 to 50 wt% of silicon dioxide in the form of silica powders of 0.1 to 1 *µ* m in diameter, and 10 to 30 wt% of either aluminum oxide or aluminum hydroxide in the form of granules of 0.5 to 100 *µ* m in diameter. The slag is less than 120 *µ* m in granule diameter and includes 15 wt% or more of silicon dioxide, 25 wt% or more of calcium oxide. The slag is similar in the composition to slag produced by a common electric furnace steelmaking process and may hence be available from the electric furnace steelmaking industry.

More particularly, the hard ceramic body according to the present invention preferably comprises 30 to 50 wt% of the first powder material, 30 to 50 wt% of the second powder material, and 10 to 30 wt% of the water-glass, in order to provide the foregoing characteristics.

Fig. 1 is a graph showing a relation between curing time and dosage of calcium oxide.

In one embodiment the components (weight percentage) of the first powder material,not in accordance with the present invention, are as follows:

| | |
|---|---|
| Common portland cement | 8 |
| Silica fume (SiO₂), 0.1 um in diameter | 31 |
| Fly ash, 0.7 to 70 um in diameter | 61 |

The portland cement consists essentially of about 23 % of silica, about 5 % of alumina, and about 65 % of calcium oxide. The fly ash consists essentially of about 56 % of silica and about 30 % of aluminum oxide.

The second powder material is silica sand of 100 to 300 *µ* m in granule diameter. The water-glass may be a potassium water-glass including 24 wt% of K₂O, 21.4 wt% of SiO₂, and 53.3 wt% of water, or a sodium water-glass including 17.9 wt% of Na₂O, 25.9 wt% of SiO₂, and 53.6 wt% of water. Lithium water-glass may also be used, however it is costly and impractical.

A 10-mm thick board of hard ceramic body was produced by mixing the first and second powder materials with the water-glass in the following ratio (wt%), pouring a resultant mixture into a pair of molds, and maintaining the mixture for 24 hours for curing.

| | |
|---|---|
| First powder material | 39.9 |
| Second powder material | 39.9 |
| Water-glass | 20.2 |

Then, the hard ceramic board was quickly dried out at 150°C for three hours and measured for physical characteristics. The resultant measurements are:

| | |
|---|---|
| Specific gravity | 1.8 |
| Compressive strength (kgf/cm²) | 1120 |
| Mohs hardness | 5 |
| Water absorption (immersed in water at 20°C for 72 hours) | 0.0002 |
| Heat-resistance (at 1050°C for 3 hours) | no change |
| Weather-resistance (1000 hours with weatherometer) | no change |

In an embodiment of the present invention, portland cement in the first powder material is substituted by slag. The slag is supplied from an electric furnace steelmaking plant (for example, Daido slag, a tradename of Daido Steel Co., Ltd.). The slag contains (wt%):

| | |
|---|---|
| Silicon dioxide (SiO₂) | 20.56 |
| Calcium oxide (CaO) | 32.83 |
| Total iron | 13.67 |
| Magnesium oxide (MaO) | 9.28 |
| Aluminum oxide (Al₂O₃) | 8.66 |
| Manganese oxide (MnO) | 4.21 |
| Total chrome (Cr) | 1.50 |
| Titanium oxide (TiO₂) | 0.46 |
| Others | 8.83 |

The first powder material comprises (wt%):

| | |
|---|---|
| Electric furnace slag with a granule diameter of under 97 µm | 40 |
| Silica fume (SiO₂) with a granule diameter of 0.2 to 0.5 µm | 40 |
| Aluminum hydroxide (Al(OH)₃) with a granule diameter of 1 to 10 µm | 20 |

The second powder material is silica sand having a granule diameter of 0.2 to 1 mm. The water-glass is the same as of the previous embodiment.

A 10-mm thick board of the hard ceramic body was produced by mixing the first and second powder materials with the water-glass in the following ratio (wt%), pouring a resultant mixture into a pair of molds, and maintaining the mixture for 6 hours for curing.

| | |
|---|---|
| First powder material | 39.9 |
| Second powder material | 39.9 |
| Water-glass | 20.2 |

Then, the hard ceramic board was quickly dried out at 150 C for three hours and measured for physical characteristics. The resultant measurements are:

| | |
|---|---|
| Specific gravity | 2.43 |
| Compressive strength (kgfcm²) | 2870 |
| Mohs hardness | 6 |
| Water absorption (immersed in water at 20°C for 72 hours) | 0.0002 |
| Heat-resistance (at 1050°C for 3 hours) | no change |
| Weather-resistance (1000 hours with weatherometer) | no change |

## Claims

1. A hard ceramic body obtainable by mixing and curing ingredients, said ingredients comprising:
(i) a first powder material composed of:
(a) from 30 to 50 wt.% of an electric-furnace steelmaking slag in the form of granules of less than 120 µm in diameter, said slag including 15 wt.% or more of silicon dioxide and 25 wt.% or more of calcium oxide;
(b) from 30 to 50 wt.% of silicon dioxide in the form of silica powders of from 0.1 µm to 1 µm in diameter; and
(c) from 10 to 30 wt.% of either aluminium oxide or aluminium hydroxide in the form of granules of from 0.5 µm to 100 µm in diameter;
(ii) a second powder material of silica sand in the form of aggregates; and
(iii) water-glass.

2. A hard ceramic body according to claim 1, wherein calcium oxide is included in the ingredients in an amount of from 0.05 to 20 wt.%

3. A hard ceramic body according to claim 1 or 2 comprising from 30 to 50 wt.% of the first powder material (i), from 30 to 50 wt.% of the second powder material (ii), and from 10 to 30 wt.% of the water-glass (iii).

4. A hard ceramic body according to any one of the preceding claims, wherein the second powder material (ii) is silica sand of from 0.1 to 2 mm diameter, preferably from 0.2 to 1 mm.

5. A hard ceramic body according to any one of the preceding claims, wherein said electric-furnace steelmaking slag (a) in said first powder material (i) has a granule diameter of less than 97 µm.

6. A hard ceramic body according to any one of the preceding claims, wherein said silicon dioxide in the form of silica powders (b) in said first powder material (i) is silica fume having a granule diameter of from 0.2 µm to 0.5 µm.

7. A hard ceramic body according to any one of the preceding claims, wherein said aluminium hydroxide (c) in said first powder material (i) has a granule diameter of from 1 µm to 10 µm.

8. An exterior-wall covering material for a building structure or for a heat-resistant covering material for a furnace, which covering material is formed from a hard ceramic body according to any one of the preceding claims.

9. A process for making a hard ceramic body for use as an exterior-wall covering material for a building structure or for use as a heat-resistant covering material for a furnace, which process comprises:
(1) mixing the following ingredients:
(i) a first powder material composed of:
(a) from 30 to 50 wt.% of an electric-furnace steelmaking slag in the form of granules of less than 120 µm in diameter, said slag including 15 wt.% or more of silicon dioxide and 25 wt.% or more of calcium oxide;
(b) from 30 to 50 wt.% of silicon dioxide in the form of silica powders of from 0.1 µm to 1 µm in diameter; and
(c) from 10 to 30 wt.% of either aluminium oxide or aluminium hydroxide in the form of granules of from 0.5 µm to 100 µm in diameter;
(ii) a second powder material of silica sand in the form of aggregates; and
(iii) water-glass;
and
(2) curing the resulting mixture.

## Patentansprüche

1. Harter Keramikkörper, erhältlich durch Mischen und Härten von Bestandteilen, wobei die Bestandteile umfassen:
(i) ein erstes Pulvermaterial, zusammengesetzt aus:
(a) von 30 bis 50 Gew.-% einer Elektroofenstahlherstellungsschlacke in der Form von Granalien von weniger als 120 *µ*m Durchmesser, wobei die Schlacke 15 Gew.-% oder mehr Siliciumdioxid und 25 Gew.-% oder mehr Calciumoxid enthält;
(b) von 30 bis 50 Gew.-% Siliciumdioxid in der-Form von Silikapulvern mit 0,1 *µ*m bis 1 *µ*m Durchmesser; und
(c) von 10 bis 30 Gew.-% von entweder Aluminiumoxid oder Aluminiumhydroxid in der Form von Granalien mit von 0,5 *µ*m bis 100 *µ*m Durchmesser;
(ii) ein zweites Pulvermaterial aus Silikasand in der Form von Aggregaten; und
(iii) Wasserglas.

2. Harter Keramikkörper nach Anspruch 1, worin Calciumoxid in den Bestandteilen in einer Menge von 0,05 bis 20 Gew.-% enthalten ist.

3. Harter Keramikkörper nach Anspruch 1 oder 2, umfassend von 30 bis 50 Gew.-% des ersten Pulvermaterials (i), von 30 bis 50 Gew.-% des zweiten Pulvermaterials (ii) und von 10 bis 30 Gew.-% Wasserglas (iii).

4. Harter Keramikkörper nach einem der vorhergehenden Ansprüche, worin das zweite Pulvermaterial (ii) Silikasand mit 0,1 bis 2 mm Durchmesser, vorzugsweise von 0,2 bis 1 mm Durchmesser, ist.

5. Harter Keramikkörper nach einem der vorhergehenden Ansprüche, worin die Elektroofenstahlherstellungsschlacke (a) in dem ersten Pulvermaterial (i) einen Granaliendurchmesser von weniger als 97 *µ*m aufweist.

6. Harter Keramikkörper nach einem der vorhergehenden Ansprüche, worin das Siliciumdioxid in der Form von Silikapulvern (b) in dem ersten Pulvermaterial (i) Silikastaub mit einem Granaliendurchmesser von 0,2 *µ*m bis 0,5 *µ*m ist.

7. Harter Keramikkörper nach einem der vorhergehenden Ansprüche, worin das Aluminiumhydroxid (c) in dem ersten Pulvermaterial (i) einen Granaliendurchmesser von 1 *µ*m bis 10 *µ*m aufweist.

8. Außenwandabdeckungsmaterial für eine Gebäudestruktur oder ein hitzebeständiges Abdeckungsmaterial für einen Ofen, wobei das Abdeckungsmaterial aus einem harten Keramikkörper nach einem der vorhergehenden Ansprüche hergestellt wurde.

9. Verfahren zum Herstellen eines harten Keramikkörpers zur Verwendung als ein Außenwandabdeckungsmaterial für eine Gebäudestruktur oder zur Verwendung als ein hitzefestes Abdeckungsmaterial für einen Ofen, wobei das Verfahren umfasst:
(1) Mischen der folgenden Bestandteile:
(i) eines erstes Pulvermaterials, zusammengesetzt aus:
(a) von 30 bis 50 Gew.-% einer Elektroofenstahlherstellungsschlacke in der Form von Granalien von weniger als 120 m Durchmesser, wobei die Schlacke 15 Gew.-% oder mehr Siliciumdioxid und 25 Gew.-% oder mehr Calciumoxid umfasst;
(b) von 30 bis 50 Gew.-% Siliciumdioxid in der Form von Silikapulvern mit von 0,1 *µ* m bis 1 *µ*m Durchmesser; und
(c) von 10 bis 30 Gew.-% entweder Aluminiumoxid oder Aluminiumhydroxid in der Form von Granalien mit von 0,5 *µ*m bis 100 *µ*m Durchmesser;
(ii) eines zweiten Pulvermaterials aus Silikasand in der Form von Aggregaten; und
(iii) Wasserglas;
und
(2) Härten des resultierenden Gemischs.

## Revendications

1. Corps céramique dur pouvant être obtenu en mélangeant et en faisant durcir des ingrédients, lesdits ingrédients comprenant :
(i) une première matière en poudre composée de :
(a) de 30 à 50 % en poids d'un laitier d'élaboration de l'acier dans un four électrique, sous forme de granules ayant un diamètre de moins de 120 *µ*m, ledit laitier comprenant 15 % en poids ou plus de dioxyde de silicium et 25 % en poids ou plus d'oxyde de calcium ;
(b) de 30 à 50 % en poids de dioxyde de silicium sous forme de poudres de silice ayant un diamètre de 0,1 *µ*m à 1 *µ*m ; et
(c) de 10 à 30 % en poids d'oxyde d'aluminium ou d'hydroxyde d'aluminium sous forme de granules ayant un diamètre de 0,5 *µ* m à 100 *µ*m ;
(ii) une seconde matière en poudre formée de sable de silice sous forme d'agrégats ; et
(iii) du verre soluble.

2. Corps céramique dur selon la revendication 1, dans lequel de l'oxyde de calcium est inclus dans les ingrédients en une quantité de 0,05 à 20 % en poids.

3. Corps céramique dur selon la revendication 1 ou 2, comprenant de 30 à 50 % de la première matière en poudre (i), de 30 à 50 % en poids de la seconde matière en poudre (ii) et de 10 à 30 % en poids de verre soluble (iii).

4. Corps céramique dur selon l'une quelconque des revendications précédentes, dans lequel la seconde matière en poudre (ii) est du sable de silice ayant un diamètre de 0,1 à 2 mm, de préférence de 0,2 à 1 mm.

5. Corps céramique dur selon l'une quelconque des revendications précédentes, dans lequel ledit laitier (a) d'élaboration de l'acier dans un four électrique dans ladite première matière en poudre (i) a un diamètre de granules inférieur à 97 *µ*m.

6. Corps céramique dur selon l'une quelconque des revendications précédentes, dans lequel ledit dioxyde de silicium sous forme de poudres de silice (b) dans ladite première matière en poudre (i) est de la poudre de silice ultrafine ayant un diamètre de granules de 0,2 *µ*m à 0,5 *µ*m.

7. Corps céramique dur selon l'une quelconque des revendications précédentes, dans lequel ledit hydroxyde d'aluminium (c) dans ladite première matière en poudre (i) a un diamètre de granules de 1 *µ*m à 10 *µ*m.

8. Matériau de recouvrement d'un mur extérieur pour la structure d'immeuble ou pour un matériau de recouvrement résistant à la chaleur pour un four, ledit matériau de recouvrement étant formé d'un corps céramique dur selon l'une quelconque des revendications précédentes.

9. Procédé de fabrication d'un corps céramique dur destiné à une utilisation en tant que matériau de recouvrement d'un mur extérieur pour la structure d'un immeuble ou à une utilisation en tant que matériau de recouvrement résistant à la chaleur pour un four, ledit procédé comprenant les étapes consistant à :
(1) mélanger les ingrédients suivants :
(i) une première matière en poudre composée de :
(a) de 30 à 50 % en poids d'un laitier d'élaboration de l'acier dans un four électrique, sous forme de granules ayant un diamètre de moins de 120 *µ*m, ledit laitier comprenant 15 % en poids ou plus de dioxyde de silicium et 25 % en poids ou plus d'oxyde de calcium ;
(b) de 30 à 50 % en poids de dioxyde de silicium sous forme de poudres de silice ayant un diamètre de 0,1 *µ*m à 1 *µ*m ; et
(c) de 10 à 30 % en poids d'oxyde d'aluminium ou d'hydroxyde d'aluminium sous forme de granules ayant un diamètre de 0,5 *µ*m à 100 *µ*m ;
(ii) une seconde matière en poudre formée de sable de silice sous forme d'agrégats ; et
(iii) du verre soluble ;
et
(2) faire durcir le mélange résultant.
